(19) **Europäisches Patentamt / European Patent Office / Office européen des brevets**

(11) **EP 4 722 273 A1**

(12) **EUROPEAN PATENT APPLICATION**
published in accordance with Art. 153(4) EPC

(43) Date of publication:
08.04.2026 Bulletin 2026/15

(21) Application number: 24815058.3

(22) Date of filing: 25.04.2024

(51) International Patent Classification (IPC):
C08G 85/00 (2006.01)   C08G 63/00 (2006.01)
C08G 63/91 (2006.01)   C08J 3/24 (2006.01)
C08L 67/00 (2006.01)   C08L 101/00 (2006.01)
C08L 101/02 (2006.01)   C08L 101/16 (2006.01)

(52) Cooperative Patent Classification (CPC):
C08G 63/00; C08G 63/91; C08G 85/00; C08J 3/24;
C08L 67/00; C08L 101/00; C08L 101/02;
C08L 101/16

(86) International application number:
PCT/JP2024/016244

(87) International publication number:
WO 2024/247573 (05.12.2024 Gazette 2024/49)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.05.2023 JP 2023087000

(71) Applicant: Nisshinbo Holdings Inc.
Tokyo 103-8650 (JP)

(72) Inventors:
• UEMURA Naohiro
  Chiba-shi, Chiba 267-0056 (JP)
• SASAKI Kenta
  Chiba-shi, Chiba 267-0056 (JP)
• HAYAKAWA Kazutoshi
  Chiba-shi, Chiba 267-0056 (JP)
• HASHIBA Toshifumi
  Chiba-shi, Chiba 267-0056 (JP)

(74) Representative: Mewburn Ellis LLP
Aurora Building
Counterslip
Bristol BS1 6BX (GB)

(54) **MARINE BIODEGRADABLE POLYMER COMPOUND HAVING ALIPHATIC UNSATURATED CARBON-CARBON BOND AND METHOD FOR PRODUCING SAME**

(57) Provided is a marine biodegradable polymer compound that contains a repeating unit including at least one bond selected from among an ester bond, an amide bond, a carbonate bond, a urethane bond, and a urea bond, has an aliphatic unsaturated carbon-carbon bond in the main chain, and has one or more substituents selected from among $-COO^-R^+$, $-SO_3^-R^+$, $-O-SO_3^-R^+$, and $-P(=O)(OH)-O^-R^+$ (in the formulas, $R^+$ is a hydrogen ion, a monovalent metal cation, or a monovalent organic cation) on a side chain.

EP 4 722 273 A1

**Description**

TECHNICAL FIELD

The present invention relates to a marine biodegradable polymer compound having an aliphatic unsaturated carbon-carbon bond and a method for producing the same.

BACKGROUND ART

In recent years, environmental pollution (marine pollution) by microplastics and adverse effects of microplastics on ecosystems have become a problem, and various efforts to reduce environmental load have started. Among them, development and widespread adoption of biodegradable resins have attracted attention.

Although general biodegradable resins exhibit high biodegradability in environments where there are many microorganisms responsible for decomposition, such as soil and sludge, the biodegradable resins have a disadvantage that they are difficult to decompose in environments where the concentration of microorganisms is very low, such as in the ocean (Non-Patent Document 1). It has also been found that even for resins reported to be biodegradable in the ocean, such as polycaprolactone (PCL) and polyhydroxyalkanoic acid (PHA), the decomposition rate varies greatly depending on the type of seawater, and it has been reported that the decomposition rate is affected by various factors such as the presence or absence and the number of decomposing bacteria in seawater, the salt concentration, the pH, the water temperature, the dissolved oxygen concentration, and the amount of dissolved organic carbon (Non-Patent Document 2).

Starch-based resins have also been put into practical use and put on the market as biodegradable resins. However, since a single starch material is greatly inferior in physical properties, most of the starch-based resins are in the form of a mixed composition with a polyester-based resin that is hardly biodegradable in the ocean, such as polybutylene adipate/terephthalate (PBAT) and polylactic acid (PLA). Therefore, also in the case of a starch-based resin, biodegradability in the ocean tends to be greatly reduced.

Under such circumstances, there is a demand for the development of a material that reliably decomposes in any type of seawater while maintaining physical properties, and a material that serves as a degradation promoter for resins hardly biodegradable in seawater and that reduces the environmental load.

PRIOR ART DOCUMENTS

NON-PATENT DOCUMENTS

Non-Patent Document 1: Hideshige Takada, "A Look at the Status of Microplastic Pollution Trends and Possible Solution Frameworks", Journal of the Japan Society of Material Cycles and Waste Management, Vol. 29, No. 4, pp. 261-269, 2018
Non-Patent Document 2: Akira Ebisui and 4 others, "Degradation of Biodegradable Plastics in Seawater", Fisheries Engineering, Vol. 40, No. 2, pp. 143-149, 2003

SUMMARY OF INVENTION

TECHNICAL PROBLEM

The present invention has been made in view of the above-mentioned circumstances, and provides a polymer compound that exhibits biodegradability in the ocean, and a marine biodegradable resin composition containing the polymer compound.

SOLUTION TO PROBLEM

As a result of intensive studies to solve the above-mentioned problem, the present inventors have found that the following marine biodegradable polymer compound exhibits high marine biodegradability: a marine biodegradable polymer compound containing a repeat unit including at least one bond selected from an ester bond, an amide bond, a carbonate bond, a urethane bond, and a urea bond, and having an aliphatic unsaturated carbon-carbon bond in a main chain, and at least one substituent selected from $-COO^-R^+$, $-SO_3^-R^+$, $-O-SO_3^-R^+$, and $-P(=O)(OH)-O^-R^+$, wherein $R^+$ is a hydrogen ion, a monovalent metal cation, or a monovalent organic cation, in a side chain. The present inventors have found that in particular, a polymer compound containing prepolymer compounds, which are contained in a marine biodegradable polymer compound and each have an anionic group, bonded to each other via a divalent or higher-valent metal cation has high strength because side chains are bonded to each other via the metal cation. The present inventors have also found that the molecule of the polymer compound is cleaved by ion exchange with a monovalent cation such as a sodium or potassium cation in seawater to promote marine degradation.

Further, the present inventors have found that when the present material is used in combination with a resin, particularly a biodegradable resin, the present material is primarily decomposed in seawater prior to the resin, and the following effects are obtained: (1) pores are formed in the resin material and the specific surface area of the resin is increased, and the growth of microorganisms responsible for decomposition is promoted, and (2) the secondary decomposition, that is, the biodegradation by microorganisms is promoted by the primary decomposition. The present inventors have found that the biodegradation of the resin material in the ocean can be consequently promoted, and have completed the present invention.

That is, the present invention provides the following marine biodegradable polymer compound and a method for producing the same.

1. A marine biodegradable polymer compound containing a repeat unit including at least one bond selected from an ester bond, an amide bond, a carbonate bond, a urethane bond, and a urea bond,
the marine biodegradable polymer compound having an aliphatic unsaturated carbon-carbon bond in a main chain, and at least one substituent selected from $-COO^-R^+$, $-SO_3^-R^+$, $-O-SO_3^-R^+$, and $-P(=O)(OH)-O^-R^+$, wherein $R^+$ is a hydrogen ion, a monovalent metal cation, or a monovalent organic cation, in a side chain.

2. The marine biodegradable polymer compound according to item 1, having two or more acidic groups in the side chain.

3. The marine biodegradable polymer compound according to item 1 or 2, wherein the repeat unit includes an ester bond.

4. The marine biodegradable polymer compound according to any one of items 1 to 3, having a numerical average molecular weight of 300 to 100,000.

5. The marine biodegradable polymer compound according to any one of items 1 to 3, further having a substituent selected from $-COO^-R^+$, $-SO_3^-R^+$, $-O-SO_3^-R^+$, and $-P(=O)(OH)-O^-R^+$, wherein $R^+$ is a hydrogen ion, a monovalent metal cation, or a monovalent organic cation, at a terminal of the main chain.

6. The marine biodegradable polymer compound according to any one of items 1 to 5, having, on average, 0.1 to 50 aliphatic unsaturated carbon-carbon bonds in one molecule.

7. The marine biodegradable polymer compound according to any one of items 1 to 6, wherein the substituent is bonded to the main chain via a linking group having 1 to 50 atoms.

8. The marine biodegradable polymer compound according to any one of items 1 to 7, wherein the substituent is $-COO^-R^+$.

9. The marine biodegradable polymer compound according to any one of items 1 to 8, having a maleic acid residue in the main chain.

10. The marine biodegradable polymer compound according to any one of items 1 to 9, wherein $R^+$ is a monovalent metal cation or a monovalent organic cation.

11. A marine biodegradable polymer compound containing polymer-type polyvalent anions derived from the marine biodegradable polymer compound according to any one of items 1 to 10, the polymer-type polyvalent anions being bonded to each other via a divalent or higher-valent metal cation.

12. The marine biodegradable polymer compound according to item 11, having a content of the metal cation of 1 to 100 eq/$10^5$ g.

13. The marine biodegradable polymer compound according to item 11 or 12, wherein the divalent or higher-valent metal cation is a calcium ion, a magnesium ion, or aluminum.

14. A marine biodegradation promoter containing the marine biodegradable polymer compound according to any one of items 1 to 13.

15. A marine biodegradable resin composition containing the marine biodegradation promoter according to item 14 and a resin.

16. The marine biodegradable resin composition according to item 15, wherein the resin is a biodegradable resin.

17. The marine biodegradable resin composition according to item 16, having a content of the marine biodegradation promoter of 1 to 50 wt%, and a content of the biodegradable resin of 50 to 99 wt%.

18. A molded body obtained from the marine biodegradable resin composition according to any one of items 15 to 17.

19. A method for producing a marine biodegradable polymer compound, the method including a step of reacting a polymer compound containing a repeat unit including at least one bond selected from an ester bond, an amide bond, a carbonate bond, a urethane bond, and a urea bond, and having an aliphatic unsaturated carbon-carbon bond in a main chain, with a compound having a reactive group that is reactive with an aliphatic unsaturated carbon-carbon bond, and having a substituent selected from -COOH, -SO$_3$H, -O-SO$_3$H, and -P(=O)(OH)-OH.

20. A method for producing a marine biodegradable polymer compound, the method including, in a marine biodegradable polymer compound containing a repeat unit including at least one bond selected from an ester bond, an amide bond, a carbonate bond, a urethane bond, and a urea bond, and having an aliphatic unsaturated carbon-carbon bond in a main chain, and at least one substituent selected from -COOH, -SO$_3$H, -O-SO$_3$H, and -P(=O)(OH)-OH in a side chain, a step of neutralizing the substituent using a monovalent base.

21. The method according to item 20, wherein the base is lithium hydroxide, sodium hydroxide, potassium hydroxide, lithium carbonate, sodium carbonate, potassium carbonate, lithium hydrogen carbonate, sodium hydrogen carbonate, or potassium hydrogen carbonate.

22. A method for producing a marine biodegradable polymer compound, the method including a step of crosslinking, using a polyvalent metal salt, a marine biodegradable polymer compound containing a repeat unit including at least one bond selected from an ester bond, an amide bond, a carbonate bond, a urethane bond, and a urea bond, and having an aliphatic unsaturated carbon-carbon bond in a main chain, and at least one substituent selected from -COO$^-$R$^+$, -SO$_3^-$R$^+$, -O-SO$_3^-$R$^+$, and -P(=O)(OH)-O$^-$R$^+$, wherein R$^+$ is a hydrogen ion, a monovalent metal cation, or a monovalent organic cation, in a side chain.

23. The method according to item 22, wherein the polyvalent metal salt is a calcium salt, a magnesium salt, or an aluminum salt.

## ADVANTAGEOUS EFFECTS OF INVENTION

The marine biodegradable polymer compound of the present invention has marine biodegradability, and exhibits characteristic physical properties derived from a substituent in the side chain and an unsaturated bond. In addition, the marine biodegradable polymer compound, when coming into contact with seawater, gradually dissolves in seawater or exhibits hydrophilicity. Therefore, biodegradation of a resin composition or a molded body containing the marine biodegradable polymer compound is promoted in the ocean, and the resin composition and the molded body are useful for countermeasures against marine pollution. Since the marine biodegradable polymer compound has marine biodegradability, biodegradation of a composition or a molded body containing the marine biodegradable polymer compound is promoted in the ocean, and the composition and the molded body are useful for countermeasures against marine pollution. Use of the marine biodegradation promoter containing the marine biodegradable polymer compound of the present invention can provide an environmentally friendly composition or molded body.

## DESCRIPTION OF EMBODIMENTS

[Marine biodegradable polymer compound A]

A first aspect of the marine biodegradable polymer compound of the present invention is a marine biodegradable polymer compound containing a repeat unit including at least one bond selected from an ester bond, an amide bond, a carbonate bond, a urethane bond, and a urea bond, and having an aliphatic unsaturated carbon-carbon bond (hereinafter also simply referred to as an aliphatic unsaturated bond) in a main chain, and at least one substituent selected from -COO$^-$R$^+$, -SO$_3^-$R$^+$, -O-SO$_3^-$R$^+$, and -P(=O)(OH)-O$^-$R$^+$, wherein R$^+$ is a hydrogen ion, a monovalent metal cation, or a monovalent organic cation, in a side chain (hereinafter, the marine biodegradable polymer compound is also referred to as a marine biodegradable polymer compound A). The aliphatic unsaturated bond may be a double bond or a triple bond, but is preferably a double bond in consideration of stability and reactivity of a structure.

The marine biodegradable polymer compound A may have a plurality of the substituents in the side chain. When the marine biodegradable polymer compound A has a plurality of the substituents, the substituents may be the same or different from each other.

From the viewpoint of mechanical properties and biodegradability, the repeat unit that constitutes the marine biodegradable polymer compound A preferably includes an ester bond or an amide bond, more preferably includes an ester bond, and most preferably includes an ester bond produced by polycondensation of a dicarboxylic acid with a diol.

The molecular weight of the marine biodegradable polymer compound A is preferably 300 to 100,000. In consideration of biodegradability in seawater and mechanical properties, the molecular weight of the marine biodegradable polymer compound A is more preferably 300 to 10,000, still more preferably 500 to 5,000, even more preferably 700 to 4,000, and most preferably 900 to 3,000. A molecular weight within the above-mentioned range is preferable because satisfactory biodegradability and mechanical properties are obtained. In the present invention, the molecular weight means a numerical average molecular weight obtained by end group determination.

It is essential that the marine biodegradable polymer compound A has the substituent in the side chain, and the marine biodegradable polymer compound A may further have the substituent at a terminal of the main chain. In that case, the marine biodegradable polymer compound A may have the substituent at both terminals, or may have the substituent only at one terminal, and an adjustment can be made according to the intended physical properties, biodegradability, and water solubility. The substituent at the terminal of the main chain may be the same or different from the substituent in the side chain.

As for the number of the substituents, the marine biodegradable polymer compound A preferably has an appropriate number of acidic groups with respect to the numerical average molecular weight in consideration of physical properties, biodegradability, and water solubility. Specifically, a value obtained by dividing the numerical average molecular weight by the average number of acidic groups per molecule is preferably 100 to 10,000, more preferably 200 to 5,000, still more preferably 300 to 5,000, and most preferably 500 to 1,000.

The marine biodegradable polymer compound A has an aliphatic unsaturated carbon-carbon bond in the main chain. The number of aliphatic unsaturated carbon-carbon bonds is, on average, preferably 0.1 to 50, more preferably 0.5 to 25, and still more preferably 1 to 10 per molecule for achieving both the strength and biodegradability.

The substituent in the side chain may be directly bonded to the main chain or bonded to the main chain via a linking group. In consideration of mechanical properties, the substituent is preferably bonded via a linking group having 1 to 50 atoms, more preferably bonded via a linking group having 2 to 30 atoms, and still more preferably bonded via a linking group having 5 to 25 atoms. The structure of the linking group may be linear, branched, or cyclic, but is preferably linear or branched, and more preferably linear. The atoms that constitute the linking group are not particularly limited, but the linking group preferably contains at least one selected from a carbon atom, an oxygen atom, a nitrogen atom, a boron atom, a sulfur atom, a phosphorus atom, and a silicon atom, and more preferably contains at least one selected from a carbon atom, an oxygen atom, a nitrogen atom, and a sulfur atom.

In consideration of environmental load and handleability, the substituent is preferably $-COO^-R^+$ or $-SO_3^-R^+$, and particularly preferably $-COO^-R^+$.

The aliphatic unsaturated bond in the marine biodegradable polymer compound A may be derived from any monomer, but in consideration of ease of introduction, cost, and possibility of side reactions, the aliphatic unsaturated bond is preferably an aliphatic unsaturated bond derived from a polyol compound having an aliphatic unsaturated bond or a polyvalent carboxylic acid compound having an aliphatic unsaturated bond, and more preferably an aliphatic unsaturated bond derived from a dicarboxylic acid compound having an aliphatic unsaturated bond.

Specific examples of the polyol compound having an aliphatic unsaturated bond preferably include a diol compound having an aliphatic unsaturated bond, such as 2-butene-1,4-diol, 3-hexene-1,6-diol, or 4-hydroxy-2-(hydroxymethyl)-2-cyclopenten-1-one. The polyol compound having an aliphatic unsaturated bond may be a commercially available product or a synthesized product.

Specific examples of the polyvalent carboxylic acid compound having an aliphatic unsaturated bond include dicarboxylic acids having an aliphatic unsaturated bond, such as maleic acid, fumaric acid, citraconic acid, mesaconic acid, 2-pentenedioic acid, methylenesuccinic acid, allylmalonic acid, isopropylidenesuccinic acid, 2,4-hexadienedioic acid, and acetylenedicarboxylic acid. In consideration of reactivity, solubility, and physical properties of the product, fumaric acid and maleic acid are preferable, and maleic acid is more preferable. The polyvalent carboxylic acid compound having an aliphatic unsaturated bond may be a commercially available product or a synthesized product.

As for the marine biodegradable polymer compound A, the degree of biodegradation relative to cellulose is preferably 40% or more. In the present invention, the degree of biodegradation relative to cellulose is the degree of degradation relative to cellulose after 60 days from immersion in seawater. The degree of biodegradation relative to cellulose of the marine biodegradable polymer compound A is more preferably 50% or more, still more preferably 60% or more, and most preferably 80% or more. The degree of biodegradation relative to cellulose can be measured by ASTM D6691, a known marine biodegradation test method, or the like, and BOD modified with reference thereto.

The marine biodegradable polymer compound A preferably has a softening point or melting point suitable for the melting temperature of the resin. The polymer compound is solid or liquid at room temperature. More specifically, the lower limit of the softening point or melting point is preferably 0°C or higher, 25°C or higher, 40°C or higher, 80°C or higher, and 100°C or higher in this order, and the upper limit is preferably 180°C or lower, 150°C or lower, and 120°C or lower in this order. In consideration of handleability, the marine biodegradable polymer compound A preferably has a softening point or melting point within a range of 0 to 180°C, and more preferably within a range of 25 to 120°C.

[Method for producing marine biodegradable polymer compound A]

Among the marine biodegradable polymer compounds A, a compound in which $R^+$ in the substituent is a hydrogen ion (that is, a compound having, as the substituent, one selected from $-COOH$, $-SO_3H$, $-O-SO_3H$, and $-P(=O)(OH)-OH$ (hereinafter, the compound is also referred to as a marine biodegradable polymer compound A1)) can be produced by a method including a step of reacting a polymer compound containing a repeat unit including at least one bond selected from an ester bond, an amide bond, a carbonate bond, a urethane bond, and a urea bond, and having an aliphatic unsaturated carbon-carbon bond in a main chain (hereinafter, the polymer compound is also referred to as a polymer compound P), with a compound having a reactive group that is reactive with an aliphatic unsaturated carbon-carbon bond, and having a substituent selected from -COOH, -SO₃H, -O-SO₃H, and -P(=O)(OH)-OH (hereinafter, the compound is also referred to as a compound Q, and the substituents are collectively also referred to as acidic groups A).

Examples of the polymer compound P include an unsaturated polyester compound, an unsaturated polyamide compound, an unsaturated polycarbonate compound, an unsaturated polyurethane compound, and an unsaturated polyurea compound, and the polymer compound P is preferably an unsaturated polyester compound or an unsaturated polyamide compound, and more preferably an unsaturated polyester compound.

The unsaturated polyester compound can be produced, for example, by polycondensation of a polyvalent carboxylic acid compound including a polyvalent carboxylic acid compound having an aliphatic unsaturated bond with a polyol compound including a polyol compound having no aliphatic unsaturated bond, polycondensation of a polyvalent carboxylic acid compound including a polyvalent carboxylic acid compound having no aliphatic unsaturated bond with a polyol compound including a polyol compound having an aliphatic unsaturated bond, or polycondensation of a polyvalent carboxylic acid compound including a polyvalent carboxylic acid compound having an aliphatic unsaturated bond with a polyol compound including a polyol compound having an aliphatic unsaturated bond. In the case of producing an unsaturated polyester, a known method for polymerizing a polyester can be referred to, and for example, a method described in Sen'i To Kogyo, Vol. 40, No. 4.5, pp. 259-261, 1984 can be referred to. The unsaturated polyester compound may be a commercially available product.

Specific examples of the polyvalent carboxylic acid compound having an aliphatic unsaturated bond and the polyol compound having an aliphatic unsaturated bond include those described above.

Specific examples of the polyol compound having no aliphatic unsaturated bond include saturated diol compounds such as ethylene glycol, 1,3-propanediol, and 1,4-butanediol. In consideration of reactivity, solubility, and physical properties of the product, 1,4-butanediol is preferable. The polyol compound having no aliphatic unsaturated bond may be a commercially available product or a synthesized product.

Specific examples of the polyvalent carboxylic acid compound having no aliphatic unsaturated bond include saturated polyvalent carboxylic acids and aromatic polyvalent carboxylic acids, such as succinic acid, glutaric acid, adipic acid, sebacic acid, terephthalic acid, isophthalic acid, trimellitic acid, and pyromellitic acid. The polyvalent carboxylic acid compound having no aliphatic unsaturated bond may be a commercially available product or a synthesized product.

The unsaturated polyester compound is preferably produced by polycondensation of a polyvalent carboxylic acid compound including a dicarboxylic acid compound having an aliphatic unsaturated bond with a polyol compound including a diol compound having no aliphatic unsaturated bond.

At this time, the polyvalent carboxylic acid compound as a raw material may contain, in addition to the dicarboxylic acid compound having an aliphatic unsaturated bond, a polyvalent carboxylic acid compound having no aliphatic unsaturated bond. Specific examples of the polyvalent carboxylic acid compound having no aliphatic unsaturated bond include succinic acid, glutaric acid, adipic acid, sebacic acid, terephthalic acid, isophthalic acid, trimellitic acid, and pyromellitic acid. In consideration of reactivity, solubility, and physical properties of the product, succinic acid or adipic acid is preferable, and succinic acid is more preferable. The content of the polyvalent carboxylic acid compound having no aliphatic unsaturated bond in the carboxylic acid compound as a raw material is preferably 0 to 80 mol%, more preferably 10 to 40 mol%, and most preferably 30 to 60 mol%.

The polyol compound as a raw material may contain, in addition to the diol compound, a triol or higher polyol compound. Specific examples of the polyol compound include monosaccharides such as glycerin, trimethylolpropane, pentaerythritol, and glucose. In consideration of reactivity, solubility, and physical properties of the product, glycerin or trimethylolpropane is preferable, and glycerin is more preferable. The content of the triol or higher polyol compound in the polyol compound as a raw material is preferably 0.01 to 5 mol%, more preferably 0.05 to 3 mol%, and most preferably 0.1 to 1 mol%.

In the polymerization reaction for the unsaturated polyester compound, a polycondensation catalyst such as antimony trioxide, a germanium catalyst, or a titanium catalyst; and a catalyst generally used for transesterification, such as magnesium acetate or manganese acetate may be used as necessary for the purpose of promoting the reaction. In consideration of environmental load, a metal-free catalyst is preferable. The amount of the catalyst used is preferably about 0.01 to 5 parts by weight per 100 parts by weight of the raw material compound.

The unsaturated polyamide compound can be produced, for example, by polycondensation of a polyvalent carboxylic acid compound including a polyvalent carboxylic acid compound having an aliphatic unsaturated bond with a polyamine compound including a polyamine compound having no aliphatic unsaturated bond, polycondensation of a polyvalent carboxylic acid compound including a polyvalent carboxylic acid compound having no aliphatic unsaturated bond with a polyamine compound including a polyamine compound having an aliphatic unsaturated bond, or polycondensation of a polyvalent carboxylic acid compound including a polyvalent carboxylic acid compound having an aliphatic unsaturated bond with a polyamine compound including a polyamine compound having an aliphatic unsaturated bond. As the polyvalent carboxylic acid, the above-mentioned compounds and the like can be used, and as the polyamine having an aliphatic unsaturated bond, for example, a diamine compound having an aliphatic unsaturated bond, such as 2-butene-1,4-diamine and 3-hexene-1,6-diamine can be used. In the case of producing a polyamide having an aliphatic unsaturated bond, a known method for polymerizing a polyamide can be referred to, and for example, the methods described in JP-B S52-012233 and JP-B H05-071056 can be referred to. The polyamide compound having an aliphatic unsaturated bond may be a commercially available product.

In the polymerization reaction for the unsaturated polyamide, a polycondensation catalyst such as a metal salt, an ammonium salt, or an ester of phosphoric acid, phosphorous acid, or hypophosphorous acid may be used as necessary for the purpose of promoting the reaction. The amount of the catalyst used is preferably about 0.01 to 5.0 parts by weight per 100 parts by weight of the raw material compound.

The unsaturated polycarbonate compound can be produced, for example, by polycondensation of a carbonate ester or a carbonate chloride, such as diphenyl carbonate or phosgene with a polyol compound having an aliphatic unsaturated bond. As the polyol compound having an aliphatic unsaturated bond, for example, a diol compound having an aliphatic unsaturated bond, such as 2-butene-1,4-diol or 3-hexene-1,6-diol can be used. In the case of producing the unsaturated polycarbonate compound, a known method for polymerizing a polycarbonate can be referred to, and for example, the methods described in JP-A 2013-010948 and JP-A 2016-094589 can be referred to. The unsaturated polycarbonate compound may be a commercially available product.

In the polymerization reaction for the unsaturated polycarbonate, a polycondensation catalyst such as antimony trioxide, a germanium catalyst, or a titanium catalyst; and a catalyst generally used for transesterification, such as magnesium acetate or manganese acetate may be used as necessary for the purpose of promoting the reaction. The amount of the catalyst used is preferably about 0.01 to 1.0 part by weight per 100 parts by weight of the raw material compound.

The unsaturated polyurethane compound can be produced, for example, by polyaddition of a polyisocyanate such as hexamethylene diisocyanate or diphenylmethane diisocyanate with a polyol compound including a diol compound having an aliphatic unsaturated bond, and an unsaturated polyester compound having a hydroxy group and an unsaturated polycarbonate compound having a hydroxy group that are produced using the above-mentioned method, polyaddition of a polyisocyanate including a polyisocyanate having an aliphatic unsaturated bond, such as 2-butene-1,4-diisocyanate or 3-hexene-1,6-diisocyanate with a polyol compound, or polyaddition of a polyisocyanate including a polyisocyanate having an aliphatic unsaturated bond with a polyol including a diol compound having an aliphatic unsaturated bond and the polyol compound having an aliphatic unsaturated bond. In the case of producing the unsaturated polyurethane compound, a known method for polymerizing a polyurethane can be referred to, and for example, the methods described in JP-B S52-012233 and JP-B H05-071056 can be referred to.

For the reaction between the polyol compound having an aliphatic unsaturated bond and a polyisocyanate, an amine-based catalyst such as 1,4-diazabicyclo[2.2.2]-octane (DABCO) or 1,8-diazabicyclo-[5.4.0]-undec-7-ene (DBU) or a tin catalyst such as dibutyltin dilaurate may be used for the purpose of shortening the reaction time and lowering the reaction temperature by improvement of the reactivity. In addition, a zinc complex, an iron complex, a bismuth complex, and a zirconium complex similar to the tin complex are also useful as catalysts. The amount of the catalyst used is preferably about 0.01 to 5 parts by weight per 100 parts by weight of the raw material compound.

The unsaturated polyurea compound can be produced, for example, by polycondensation of the above-mentioned polyisocyanate with a polyamine, which includes a polyamine compound including the polyamine compound having an aliphatic unsaturated bond and an unsaturated polyamide compound having an amino group produced by the above-mentioned method, polycondensation of a polyisocyanate including the above-mentioned polyisocyanate having an aliphatic unsaturated bond with a polyamine compound, or polycondensation of a polyisocyanate including the above-mentioned polyisocyanate having an aliphatic unsaturated bond with a polyamine compound, which includes the polyamine compound having an aliphatic unsaturated bond and an unsaturated polyamide compound having an amino group produced by the above-mentioned method. In the case of producing the unsaturated polyurea compound, a known method for polymerizing a polyurea can be referred to, and for example, the method described in JP-A 2004-027148 can be referred to.

In the polymerization reaction for the unsaturated polyurea compound, a catalyst such as a salt containing a metal such as lithium, sodium, magnesium, aluminum, potassium, titanium, cobalt, germanium, zinc, rubidium, strontium, tin, antimony, cesium, barium, or lead, an alkoxide, or an organometallic compound may be used as necessary for the purpose of promoting the reaction. The amount of the catalyst used is preferably about 0.0001 to 1 part by weight per 100 parts by weight of the raw material compound.

In the reaction between the polymer compound P and the compound Q, the amount of the compound Q used is preferably 5 to 200 mol% with respect to the aliphatic unsaturated bond in the unsaturated polyester compound. When the amount of the compound Q used is 5 to 20 mol%, the physical properties derived from the double bond are strongly exhibited, and when the amount of the compound Q used is more than 20 mol% and 200 mol% or less, the physical properties derived from the acidic groups A in the side chain are strongly exhibited. Therefore, the amount may be adjusted according to the purpose.

The reaction between the polymer compound P and the compound Q is not particularly limited, and for example, a conjugated addition reaction, a radical reaction, a Diels-Alder reaction, or a photocyclization addition reaction can be used. A conjugated addition reaction is preferable in consideration of reactivity, selectivity, and physical properties of the product. Particularly preferable examples of the reaction include an addition reaction of a mercaptocarboxylic acid, an amino acid, a malonic acid derivative, or the like to an aliphatic unsaturated bond of a polyester compound having a maleic acid residue.

In the reaction between the polymer compound P and the compound Q, a commonly used catalyst may be used as necessary. Examples of the catalyst include base catalysts such as DBU and TEA in the conjugated addition reaction, transition metal catalysts such as an organoruthenium complex and an organotitanium complex in the radical reaction, Lewis acid catalysts such as ytterbium triflate and scandium triflate in the Diels-Alder reaction, and photosensitizers such as thiophene and benzophenone in the photocyclization addition reaction.

The compound Q can be appropriately selected according to the intended reaction. Examples of the compound Q include mercaptocarboxylic acids such as 3-mercaptopropionic acid, amino acids such as 5-aminovaleric acid and 6-aminohexanoic acid, aminosulfonic acids such as 2-aminoethanesulfonic acid, aminophosphoric acids such as ethanolamine phosphoric acid, organic acids having nucleophilicity, such as malonic acid and organocuprate complexes, and derivatives thereof in the case of the conjugated addition reaction; carboxylic acids and sulfonic acids having an unsaturated bond, such as acrylic acid, 3-pentenoic acid, carboxystyrene, and styrenesulfonic acid in the case of the radical reaction; pyrrole carboxylic acids such as 1-methyl-2-pyrrole carboxylic acid in the case of the Diels-Alder reaction; and carboxylic acids having an unsaturated bond, such as acrylic acid and 3-pentenoic acid in the case of the photocyclization addition reaction. In consideration of reactivity, selectivity, physical properties of the product, and safety, it is preferable to use 3-mercaptopropionic acid, 5-aminovaleric acid, 6-aminohexanoic acid, or a malonic acid derivative in the conjugated addition reaction, and it is most preferable to use 3-mercaptopropionic acid in the conjugated addition reaction. The compound Q may be a commercially available product or a synthesized product.

The compound Q may be used with the acidic groups A. Alternatively, if necessary, the acidic groups A may be protected by esterification or the like, and deprotected after the reaction between the polymer compound P and the compound Q so that the groups may act as the acidic groups A.

Among the marine biodegradable polymer compounds A, a compound in which a part or all of $R^+$ in the substituent is a monovalent metal cation or a monovalent organic cation (hereinafter, the marine biodegradable polymer compound is also referred to as a marine biodegradable polymer compound A2) can be synthesized by neutralizing a part or all of the acidic groups A of the marine biodegradable polymer compound A1.

In the marine biodegradable polymer compound A2, as $R^+$ in the substituent, a lithium ion, a sodium ion, a potassium ion, a rubidium ion, a cesium ion, a francium ion, an ammonium ion, a methylammonium ion, an ethylammonium ion, an anilinium ion, a pyridinium ion, a dimethylammonium ion, a diethylammonium ion, a trimethylammonium ion, a triethylammonium ion and the like are preferable. From the viewpoint of safety, environmental load, and operability, a sodium ion, a potassium ion, and an ammonium ion are more preferable, and a sodium ion and a potassium ion are still more preferable.

The neutralization reaction is not particularly limited, and can be performed using, for example, an inorganic base and/or an organic base capable of reacting with an acidic group. Examples of the base include lithium hydroxide, sodium hydroxide, potassium hydroxide, lithium carbonate, sodium carbonate, potassium carbonate, lithium hydrogen carbonate, sodium hydrogen carbonate, potassium hydrogen carbonate, trisodium phosphate, tripotassium phosphate, lithium methoxide, sodium methoxide, potassium methoxide, lithium tert-butoxide, sodium tert-butoxide, potassium tert-butoxide, ammonia, methylamine, ethylamine, TEA, and DBU. Among them, lithium hydroxide, sodium hydroxide, potassium hydroxide, lithium carbonate, sodium carbonate, potassium carbonate, lithium hydrogen carbonate, sodium hydrogen carbonate, and potassium hydrogen carbonate are preferable. In consideration of safety and environmental load, sodium hydroxide, potassium hydroxide, sodium carbonate, potassium carbonate, sodium hydrogen carbonate, and potassium hydrogen carbonate are particularly preferable.

[Marine biodegradable polymer compound B]

A second aspect of the marine biodegradable polymer compound of the present invention is a marine biodegradable polymer compound obtained by crosslinking the marine biodegradable polymer compound A with a divalent or higher-valent metal cation (hereinafter, the marine biodegradable polymer compound is also referred to as a marine biodegradable polymer compound B). That is, the marine biodegradable polymer compound B has a structure in which anionic polymer compounds are bonded to each other via an ionic bond of a divalent or higher-valent metal cation, and the anionic polymer compounds each contain a repeat unit including at least one bond selected from an ester bond, an amide bond, a carbonate bond, a urethane bond, and a urea bond, and have an aliphatic unsaturated carbon-carbon bond in a main chain, and at least one monovalent anionic substituent selected from $-COO^-$, $-SO_3^-$, $-O-SO_3^-$, and $-P(=O)(OH)-O^-$ in a side chain.

The divalent or higher-valent metal cation is not particularly limited, and examples thereof include a calcium ion, a beryllium ion, a magnesium ion, a strontium ion, a barium ion, a zinc ion, an aluminum ion, an iron ion, a copper ion, a platinum ion, a gold ion, a titanium ion, a nickel ion, a cobalt ion, a manganese ion, a zirconium ion, a ruthenium ion, a rhodium ion, a palladium ion, a scandium ion, a gallium ion, an indium ion, and a radium ion. Among them, a calcium ion, a beryllium ion, a magnesium ion, a strontium ion, a barium ion, a zinc ion, an aluminum ion and the like are preferable, and a calcium ion, a magnesium ion, an aluminum ion, and the like are more preferable. Only one kind of the divalent or higher-valent metal cation may be used, or a plurality of kinds thereof may be combined.

The metal ion equivalent of the marine biodegradable polymer compound is preferably 1 to 100 eq/$10^5$ g. In consideration of biodegradability in seawater and mechanical properties, the metal ion equivalent of the marine biodegradable polymer compound is more preferably 2 to 80 eq/$10^5$ g and still more preferably 10 to 50 eq/$10^5$ g. A metal ion equivalent within the above-mentioned range is preferable because satisfactory biodegradability is obtained, and mechanical properties are not impaired. The metal ion equivalent is a value measured by inductively coupled plasma mass spectrometry (ICP-MS).

The marine biodegradable polymer compound B is a compound in which at least two marine biodegradable polymer compounds A2 are bonded to each other via a metal cation. The marine biodegradable polymer compound B may contain only one kind of the marine biodegradable polymer compound A2 or a plurality of different kinds of the marine biodegradable polymer compound A2, and may simultaneously contain another anionic compound. Examples of such an anionic compound include a carboxylic acid anion, a sulfonic acid anion, and a polymer compound having an anionic group at the terminal and having a numerical average molecular weight of 500 to 10,000.

The marine biodegradable polymer compound B may have a linear, branched, or crosslinked network structure. When the marine biodegradable polymer compound B is linear or branched, the molecular weight thereof is preferably 600 to 1,000,000, more preferably 1,000 to 500,000, still more preferably 5,000 to 300,000, and most preferably 10,000 to 100,000. Although general biodegradable resins described later exhibit high biodegradability in environments where there are many microorganisms responsible for decomposition, such as soil and sludge, the biodegradable resins have a disadvantage that they are difficult to decompose in environments where the concentration of microorganisms is very low, such as in the ocean. The present inventors have noted metal ions abundantly present in seawater and stable salinity in the ocean. It is presumed that the marine biodegradable polymer compound B is decomposed by ion exchange (reduced in molecular weight by cleavage) in seawater, that is, chemically reduced in molecular weight, so that the decomposition efficiently proceeds even in an environment where there are few microorganisms responsible for biodegradation. Setting the molecular weight of the marine biodegradable polymer compound B within the above-mentioned range more efficiently promotes the biodegradability in the ocean, and is, at the time of normal use, useful in terms of physical properties in the resin composition in which the marine biodegradable polymer compound B is used.

The marine biodegradable polymer compound B preferably has a softening point or melting point suitable for the melting temperature of the resin. The polymer compound is solid at room temperature. More specifically, the lower limit of the softening point or melting point is preferably 40°C or higher, 50°C or higher, and 60°C or higher in this order, and the upper limit is preferably 250°C or lower, 180°C or lower, 160°C or lower, and 140°C or lower in this order. When the resin is a biodegradable resin, the marine biodegradable polymer compound B preferably has a softening point or melting point within a range of 40 to 200°C, more preferably within a range of 50 to 160°C, and still more preferably within a range of 60 to 140°C.

As for the marine biodegradable polymer compound B, the degree of biodegradation relative to cellulose is preferably 40% or more. In the present invention, the degree of biodegradation relative to cellulose is the degree of degradation relative to cellulose after 60 days from immersion in seawater. The degree of biodegradation relative to cellulose of the marine biodegradable polymer compound B is more preferably 50% or more, still more preferably 60% or more, and most preferably 80% or more. The degree of biodegradation relative to cellulose can be measured by ASTM D6691, a known marine biodegradation test method, or the like, and BOD modified with reference thereto.

[Method for producing marine biodegradable polymer compound B]

The marine biodegradable polymer compound B can be produced by a method including a step of crosslinking the marine biodegradable polymer compound A using a polyvalent metal salt.

Examples of the crosslinking treatment method include a method in which a powder or solution of a polyvalent metal salt is added dropwise to a medium in which the marine biodegradable polymer compound A is dissolved, and the marine biodegradable polymer compound B is deposited or sedimented while a bonding treatment is performed, a method in which a powder or solution of a polyvalent metal salt is added dropwise to a melt of the marine biodegradable polymer compound A, and a bonding treatment is performed, and a method in which a solution containing the marine biodegradable polymer compound A dissolved therein is added dropwise to a solution containing a powder of a polyvalent metal salt or a polyvalent metal salt dissolved therein, and the marine biodegradable polymer compound B is deposited or sedimented while a bonding treatment is performed.

In a preferable example, a solution containing the marine biodegradable polymer compound A2 dissolved in water, an organic solvent, or a mixed solvent thereof, or a melt containing the marine biodegradable polymer compound A2 that is dissolved by heating is prepared. At this time, heating may be performed as necessary in order to improve the solubility or reduce the viscosity of the melt. Next, a solution containing a divalent or higher-valent metal salt is added to the obtained solution or melt and stirred. Alternatively, a solution or a melt containing the marine biodegradable polymer compound A2 dissolved therein may be added to a solution containing a divalent or higher-valent metal salt and stirred.

Examples of the polyvalent metal salt include a calcium salt, a strontium salt, a magnesium salt, a barium salt, a radium salt, a lead salt, a zinc salt, a nickel salt, an iron salt, a copper salt, a cadmium salt, a cobalt salt, a manganese salt, an aluminum salt, a gallium salt, an indium salt, and a thallium salt. From the viewpoint that the metal of the polyvalent metal salt is contained in seawater, and of the environmental aspect, safety, and versatility, a calcium salt, a magnesium salt, and an aluminum salt are preferable, and in consideration of the environment in seawater, a calcium salt and a magnesium salt are more preferable. Specific examples of the polyvalent metal salt include calcium chloride, calcium sulfate, calcium carbonate, calcium hydroxide, calcium oxide, magnesium chloride, magnesium sulfate, magnesium carbonate, magnesium hydroxide, magnesium oxide, aluminum sulfate, sodium aluminum sulfate (sodium alum), and potassium aluminum sulfate (potassium alum). From the viewpoint of solubility in water, handleability, cost, and the like, calcium chloride, magnesium chloride, and aluminum sulfate are preferable.

Neutralizing the acidic groups A of the marine biodegradable polymer compound A1 using a base containing a divalent or higher-valent metal can simultaneously perform neutralization and bonding via a divalent or higher-valent metal cation.

In a preferable example, a solution containing the marine biodegradable polymer compound A1 dissolved in water, an organic solvent, or a mixed solvent thereof, or a melt containing the marine biodegradable polymer compound A1 that is dissolved by heating is prepared. At this time, heating may be performed as necessary in order to improve the solubility or reduce the viscosity of the melt. Next, a solution of a base containing a divalent or higher-valent metal is added to the obtained solution or melt and stirred. Alternatively, a solution or a melt containing the marine biodegradable polymer compound A1 dissolved therein may be added to a solution of a base containing a divalent or higher-valent metal and stirred.

Examples of the base containing a divalent or higher-valent metal include magnesium hydride, strontium hydride, calcium hydride, barium hydride, magnesium methoxide, calcium methoxide, strontium methoxide, barium methoxide, magnesium hydroxide, calcium hydroxide, strontium hydroxide, barium hydroxide, magnesium oxide, strontium oxide, calcium oxide, barium oxide, magnesium carbonate, strontium carbonate, calcium carbonate, barium carbonate, magnesium hydrogen carbonate, strontium hydrogen carbonate, calcium hydrogen carbonate, and barium hydrogen carbonate. From the viewpoint of solubility in water, reactivity, cost, and the like, calcium hydride, calcium methoxide, calcium hydroxide, and barium hydroxide are preferable, and calcium hydroxide is more preferable.

The concentration of the polyvalent metal salt in the solution containing the polyvalent metal salt, or the concentration of the base containing a divalent or higher-valent metal in the solution containing the base is preferably 1 to 40 wt%, and more preferably 10 to 30 wt%. The solvent of the solution is preferably water, a lower alcohol solvent such as methanol, ethanol, 1-propanol, or 2-propanol, an amphiphilic solvent such as acetone, acetonitrile, THF, DMF, DMSO, or NMP, or a mixed solvent thereof, but may be a mixed solvent with another organic solvent as long as the solvent can dissolve the salt so that the solution may have a desired concentration without dissolving the particles.

In addition, as long as the polyvalent metal salt or the base containing a divalent or higher-valent metal has satisfactory reactivity and reacts even in a solid state, the polyvalent metal salt or the base may be used in a powder form without a medium, or may be used in the form of a dispersion in a small amount of a medium.

As a result, the marine biodegradable polymer compounds A can be bonded to each other via the metal cation, and the target marine biodegradable polymer compound B that has gradually become insoluble is deposited or sedimented, or obtained as a bulk. The treatment time is preferably 0.5 to 24 hours, and more preferably 1 to 12 hours.

At this time, for the purpose of controlling the particle size and the spherical shape of the deposit or sediment, a surfactant or a polymer stabilizer may be dissolved in at least one of a solution containing the marine biodegradable polymer compound A1 or A2 dissolved therein and a solution containing a base containing a divalent or higher-valent metal or a polyvalent metal salt.

Heating may be performed when the target marine biodegradable polymer compound B is deposited or sedimented. The heating may be performed at the time of mixing a solution containing the marine biodegradable polymer compound A1 or A2 dissolved therein or a melt of the marine biodegradable polymer compound A1 or A2 with a solution containing a polyvalent metal salt or a base containing a divalent or higher-valent metal, at the time of stirring after mixing, or at both of the times. The heating temperature is preferably 15 to 150°C, more preferably 20 to 100°C, and preferably 40 to 80°C.

After the treatment, the particles are washed and dried as necessary, whereby the marine biodegradable polymer compound B can be obtained. The washing can be performed by an ordinary method, and examples of the method include a method of removing the solvent after the bonding treatment, adding water thereto, and centrifuging the resulting mixture. The drying can be performed by an ordinary method. For example, the drying can be performed by a method such as spray drying, vacuum drying, or freeze drying. Incidentally, the obtained marine biodegradable polymer compound B may be subjected to a surface treatment or a pulverization treatment to adjust the particle size by a known facility as necessary.

The marine biodegradable polymer compound B may be a compound in which at least one of terminals of the anionic polymer compounds, which are not bonded to each other via a divalent metal cation, is capped with a capping segment group.

Depending on the capping segment group selected, in a single material and a composite material (marine biodegradable resin composition) containing the present material, a plurality of effects can be exerted: adjustment of the melting temperature and melt viscosity, adjustment of the crystallinity, adjustment of adhesion of microorganisms and biodegradability, adjustment of physical properties such as the tensile strength, flexural strength, and elasticity of the resin, improvement of compatibility with the resin, adjustment of hydrophobicity, adjustment of water repellency, adjustment of adhesive properties, and adjustment of plasticity, and improvement can be achieved in terms of both the biodegradability and physical properties of the marine biodegradable resin composition. Since an organic anion serving as the capping segment is desired to have a structure having biodegradability in the ocean, it is desirable to select a capping segment group having a molecular weight of 5,000 or less and having marine biodegradability. For example, when emphasis is placed on the biodegradation rate in the ocean and the maintenance of average physical properties, the molecular weight of the capping segment group is preferably 2,500 or less, and more preferably 1,000 or less.

Specifically, the capping segment group preferably has a monovalent hydrocarbon group having 3 or more carbon atoms, more preferably has a monovalent hydrocarbon group having 6 or more carbon atoms, still more preferably has a monovalent hydrocarbon group having 10 or more carbon atoms, and most preferably has a monovalent hydrocarbon group having 12 or more carbon atoms. The upper limit of the number of carbon atoms in the monovalent hydrocarbon group is not particularly limited, but the number of carbon atoms is preferably 30 or less, more preferably 25 or less, and still more preferably 20 or less.

The capping segment group is preferably a monovalent organic anion selected from a carboxylic acid anion having a monovalent hydrocarbon group having 3 or more carbon atoms, a sulfonic acid anion having a monovalent hydrocarbon group having 3 or more carbon atoms, a sulfate ester anion having a monovalent hydrocarbon group having 3 or more carbon atoms, and a phosphate ester anion having a monovalent hydrocarbon group having 3 or more carbon atoms. Among them, a monovalent organic anion derived from a carboxylic acid having a monovalent hydrocarbon group having 3 or more carbon atoms is preferable, and a monovalent organic anion derived from a fatty acid having a monovalent hydrocarbon group having 3 or more carbon atoms or an amino acid derivative having a monovalent hydrocarbon group having 3 or more carbon atoms is more preferable.

The end-capping can be performed using at least one end-capping agent selected from a carboxylic acid having a monovalent hydrocarbon group having 3 or more carbon atoms, a salt of the carboxylic acid, a sulfonic acid having a monovalent hydrocarbon group having 3 or more carbon atoms, a salt of the sulfonic acid, a sulfuric acid ester having a monovalent hydrocarbon group having 3 or more carbon atoms, a salt of the sulfuric acid ester, a phosphoric acid ester having a monovalent hydrocarbon group having 3 or more carbon atoms, and a salt of the phosphoric acid ester. The end-capping can be performed by adding the end-capping agent to a solution containing the polymer compound A or B, and then performing a bonding treatment using a polyvalent metal ion.

The end-capping agent is preferably an acid compound or a salt compound described in paragraphs [0029] to [0044] of JP-A 2021-191810.

[Marine biodegradable resin composition]

The marine biodegradable resin composition of the present invention contains the marine biodegradable polymer compound.

The marine biodegradable polymer compound may be used as a main raw material, or may be used as an additive in combination with a different resin. The different resin is not particularly limited, but is preferably a biodegradable resin. When used in combination with the different resin, the marine biodegradable polymer compound as an additive functions as a marine biodegradation promoter. At this time, the composite of the marine biodegradation promoter and the resin serves as a resin composition whose biodegradation in the ocean is promoted. In addition, for the purpose of adjusting the physical properties and handleability of the resin composition, as the different resin, a plurality of kinds of resins can be used in combination.

Examples of the different resin include polyethylene, polyester, polypropylene, polyethylene terephthalate, polystyrene, polyurethane, an epoxy resin, a chlorinated polyethylene resin, a chlorinated polypropylene resin, a modified nylon resin, a phenol resin, a silicone resin, polyvinyl acetate, an ethylene-vinyl acetate copolymer, polyvinyl chloride, polyvinylidene chloride, a styrene-maleic acid resin, a styrene-butadiene resin, a butadiene resin, an acrylonitrile-butadiene resin, a poly(meth)acrylonitrile resin, a (meth)acrylamide resin, bio-PET, bio-polyamide, bio-polycarbonate, bio-polyurethane, polyvinyl alcohol, polybutylene adipate/terephthalate, polyethylene terephthalate succinate, bio-polybutylene succinate, a polylactic acid blend, a starch blend polyester resin, polybutylene terephthalate succinate, polylactic acid, and polyhydroxyalkanoic acid. In particular, a resin having high biodegradability is preferable in consideration of reduction of environmental load and an effect of promoting marine biodegradability.

Examples of the biodegradable resin include resins derived from petroleum as a raw material, such as polycaprolactone, poly(caprolactone/butylene succinate), polybutylene succinate (PBS), poly(butylene succinate/adipate) (PBSA), poly(butylene adipate/terephthalate) (PBAT), poly(butylene succinate/carbonate), a polyethylene terephthalate copolymer, poly(ethylene terephthalate/succinate), poly(tetramethylene adipate/terephthalate), polyethylene succinate, polyvinyl alcohol, polyglycolic acid, a glycolic acid/caprolactone copolymer, and a glycolic acid/trimethylene carbonate copolymer; resins partially derived from biomass as a raw material, such as a (polylactic acid/polybutylene succinate-based) block copolymer, a (polylactic acid/polycaprolactone) copolymer, a (polylactic acid/polyether) copolymer, polylactic acid blend PBAT, a lactic acid/glycolic acid copolymer, bio-polybutylene succinate, poly(butylene succinate/adipate), a starch blend polyester resin, and poly(butylene terephthalate succinate); resins 100% derived from biomass as a raw material, such as polyhydroxyalkanoic acids including polyhydroxybutyric acid, polyhydroxyvaleric acid, polyhydroxycaprylic acid, poly(hydroxybutyrate/hydroxyhexanoate) (PHBH), poly(3-hydroxybutyrate/4-hydroxybutyrate) (P3HB4HB), and poly(hydroxybutyrate/hydroxyvalerate) (PHBV), and polylactic acid (PLA); and resins derived from natural polymers, such as cellulose, cellulose acetate, a cellulose ester resin, starch, esterified starch, and chitosan.

Among them, it is preferable to combine a biodegradable resin selected from resins having biodegradability in soil or compost but having poor biodegradability in the ocean, for example, polycaprolactone, (bio) PBS, PBSA, PBAT, poly(tetramethylene adipate/terephthalate), poly(butylene succinate/carbonate), polyhydroxyalkanoic acids such as PHBH and PHBV, PLA, and resins derived from natural polymers, such as cellulose, starch, and chitosan, with the marine biodegradable polymer compound. As the biodegradable resin, PBSA, PBS, PBAT, PLA, and resins derived from starch are particularly preferable.

In addition, in consideration of reduction of environmental load, the raw material of the resin to be combined is preferably derived from biomass, and most preferably 100% derived from biomass.

The marine biodegradable resin composition of the present invention may contain a solvent. The solvent may either dissolve the resin serving as a matrix while leaving the marine biodegradable polymer compound undissolved as particles, or may dissolve both the resin and the marine biodegradable polymer compound. Appropriate adjustment of the solvent makes it possible to use the marine biodegradable resin composition as a molded body having a film shape formed by casting or the like, a paint, an ink, a surface treatment agent, and the like. Preferable examples of the solvent include water, formic acid, hexane, heptane, acetonitrile, N-methylpyrrolidone, dimethylformamide, dimethylacetamide, dimethylsulfoxide, dimethylsulfone, acetone, methyl ethyl ketone, diethyl ketone, acetophenone, dimethyl ether, dipropyl ether, tetrahydrofuran, chloroform, methylene chloride, trichloroethylene, ethylene dichloride, tetrachloroethane, chlorobenzene, methanol, ethanol, n-propanol, isopropanol, butanol, pentanol, hexafluoroisopropanol, methyl glycol, methyl triglycol, hexyl glycol, phenyl glycol, ethylene glycol, propylene glycol, phenol, cresol, polyethylene glycol, benzene, toluene, and xylene. These may be used singly or as a mixture of two or more types thereof.

When a solvent is used, the total concentration of the resin and the marine biodegradable polymer compound in the resin composition is preferably 0.5 to 90 wt%, more preferably 1 to 80 wt%, still more preferably 5 to 60 wt%, and most preferably 10 to 50 wt%. In addition, the ratio of the marine biodegradable polymer compound to the resin is preferably 99 : 1 to 10 : 90, more preferably 97 : 3 to 40 : 60, still more preferably 95 : 5 to 50 : 50, and most preferably 90 : 10 to 60 : 40 in weight ratio.

The marine biodegradable resin composition of the present invention does not have to contain a solvent. In this case, the resin may be thermally melted, and an unmelted marine biodegradable polymer compound may be added thereto and mixed, or the resin and the marine biodegradable polymer compound may be melted together and mixed.

The content of the marine biodegradable polymer compound in the marine biodegradable resin composition of the present invention is preferably 1 to 50 wt%, more preferably 3 to 50 wt%, still more preferably 5 to 45 wt%, even more preferably 7 to 40 wt%, and most preferably 10 to 35 wt%. Meanwhile, the content of the resin is preferably 50 to 99 wt%, more preferably 50 to 97 wt%, still more preferably 55 to 95 wt%, even more preferably 60 to 93 wt%, and most preferably 65 to 90 wt%. When the marine biodegradable resin composition contains the marine biodegradable polymer compound within the above-mentioned range, it is possible to utilize the marine biodegradable polymer compound as a marine biodegradation promoter that promotes the progress of biodegradability in seawater while maintaining the physical properties of the biodegradable resin. The marine biodegradable polymer compound may be used singly or in combination of two or more types thereof.

The marine biodegradable resin composition of the present invention may contain additives such as an antioxidant, a release agent, a peeling agent, a surface modifier, a hydrophobizing agent, a water repellent agent, a hydrophilizing agent, a dye and a pigment, a colorant, a heat stabilizer, a light stabilizer, a weather resistance improver, an antistatic agent, an antifogging agent, a lubricant, an anti-blocking agent, a hardening agent, a softening agent, a compatibilizer, a flame retardant, a flowability improver, a plasticizer, a dispersant, an antibacterial agent, a filler, and a metal deactivator as necessary. The content of these additives is not particularly limited as long as the effects of the present invention are not impaired, but is preferably about 0.1 to 50 parts by weight per 100 parts by weight of the resin.

When the marine biodegradable resin composition contains a solvent, the marine biodegradable resin composition can be prepared, for example, by adding a resin, the marine biodegradable polymer compound, and if necessary, the additive to a solvent simultaneously or in an arbitrary order, and mixing them. Alternatively, when the marine biodegradable resin composition does not contain a solvent, for example, the resin may be melted, and the marine biodegradable polymer compound, and if necessary, the additive may be added thereto simultaneously or in an arbitrary order and mixed, or the resin and the marine biodegradable polymer compound may be heated, melted together, and mixed, and if necessary, the additive may be added and mixed.

[Molded body]

The resin composition can be molded to provide a molded body containing the resin and the marine biodegradable polymer compound dispersed or dissolved in the resin. When the resin composition contains a solvent, the resin composition may be molded as it is, and when the resin composition does not contain a solvent, the resin composition may be molded after the resin or the resin and the marine biodegradable polymer compound in the resin composition are thermally melted.

Examples of the shape of the molded body include a film shape, a fiber shape, a plate shape, a foam molded body shape, and other shapes according to use. The molding method is not particularly limited, and various conventionally known molding methods can be used. Specific examples thereof include blow molding, injection molding, extrusion molding, compression molding, melt extrusion molding, solution casting molding, and calender molding.

The marine biodegradable resin composition of the present invention can be used as a raw material of plastic molded articles and as various additives for molded articles, such as a liquid, a coating film, a film, a board, and paper. When the marine biodegradable resin composition is used as a raw material of a plastic molded article, the composition can be used as a raw material of general purpose and marine use materials, such as a film, a packaging, a container, a tray, a laminating material, an adhesive agent, a covering material, a fiber for medical care, clothing, or the like, shoes, a belt, a tire, a tube, an impact absorbing material, a fishing line, and a fishing net, and can be particularly suitably used as a raw material of marine use materials and the like. Further, when the marine biodegradable resin composition is used as an additive, it can be widely used as an additive for, for example, a light scattering agent, an optical filter material, a colorant, a cosmetic, an absorbent, an adsorbent, an ink, an adhesive agent, an electromagnetic wave shielding material, a fluorescent sensor, a biomarker, a recording material, a recording element, a polarizing material, a drug retainer for a drug delivery system (DDS), a biosensor, a DNA chip, an inspection agent, a baked porous molded product, an anti-blocking agent, an additive for a printing ink used for screen printing, offset printing, process printing, gravure printing, tampography, a coater, or inkjet printing, an ink additive for a writing instrument such as a marking pen, a ballpoint pen, a fountain pen, a brush pen, or a felt-tipped pen, an additive for stationery such as a crayon, an artists' paint, and an eraser, and an additive for a paint used for brush coating, spray coating, electrostatic coating, electrodeposition coating, flow coating, roller coating, or dip coating. In particular, the marine biodegradable resin composition can be widely used as an additive for a paint and the like used for marine use, such as a ship paint.

EXAMPLES

Hereinafter, the present invention is specifically described with reference to Examples and Comparative Examples, but the present invention is not limited to the following Examples.

In the following Examples and Comparative Examples, the metal ion equivalent was measured by an emission spectrometry using ICP-MS (ICPE-9820 manufactured by Shimadzu Corporation) after a target substance was heated and decomposed with nitric acid or aqua regia. The melting temperature was measured using a differential scanning calorimeter (DSC 6200 manufactured by Seiko Instruments Inc.). Specifically, 5 mg of a measurement sample was precisely weighed, and the precisely weighed measurement sample was put in an aluminum pan. An empty aluminum pan was used as a reference. The temperature was raised at a temperature rise rate of 10°C/min in a measurement temperature range of 20 to 300°C under normal temperature and normal humidity. The melting temperature was calculated from the endothermic (melting) peak point of the obtained curve.

[1] Synthesis of marine biodegradable polymer compound A

[Example 1-1] Synthesis of marine biodegradable polymer compound A-1

To a 300 mL recovery flask, 43.2 g of 1,4-butanediol and 53.7 g of maleic acid were added, and the resulting mixture was stirred under a nitrogen atmosphere at 160°C for 6 hours. Then, 2.26 g of 3-mercaptopropionic acid, 1.33 g of triethylamine, and 100 g of acetonitrile were added thereto, and the resulting mixture was stirred at 70°C for 3 hours to yield a marine biodegradable polymer compound A-1.

It was confirmed by $^1$H-NMR measurement that the marine biodegradable polymer compound A-1 had a numerical average molecular weight of 2,100, 8 aliphatic unsaturated bonds on average, and 2 acidic groups on average.

[Example 1-2] Synthesis of marine biodegradable polymer compound A-2

To a 300 mL recovery flask, 41.6 g of 1,4-butanediol, 50.8 g of dimethyl maleate, 16.8 g of dimethyl terephthalate, and 0.96 g of titanium tetraisopropoxide were added, and the resulting mixture was stirred under a nitrogen atmosphere at 160°C for 5 hours. Then, 37.1 g of 3-mercaptopropionic acid and 18.2 g of acetonitrile were added thereto, and the resulting mixture was stirred at 130°C for 4 hours to yield a marine biodegradable polymer compound A-2.
It was confirmed by $^1$H-NMR measurement that the marine biodegradable polymer compound A-2 had a numerical average molecular weight of 2,000, 3 aliphatic unsaturated bonds on average, and 4 acidic groups on average.

[Example 1-3] Synthesis of marine biodegradable polymer compound A-3

To a 300 mL recovery flask, 39.7 g of 1,4-butanediol, 25.2 g of succinic acid, and 25.0 g of maleic acid were added, and the resulting mixture was stirred under a nitrogen atmosphere at 160°C for 6 hours. Then, 25.7 g of 3-mercaptopropionic acid and 11.4 g of acetonitrile were added thereto, and the resulting mixture was stirred at 130°C for 3 hours to yield a marine biodegradable polymer compound A-3.
It was confirmed by $^1$H-NMR measurement that the marine biodegradable polymer compound A-3 had a numerical average molecular weight of 1,800, 2 aliphatic unsaturated bonds on average, and 2 acidic groups on average.

[Example 1-4] Synthesis of marine biodegradable polymer compound A-4

To a 300 mL recovery flask, 43.5 g of 1,4-butanediol, 52.9 g of maleic acid, and 0.53 g of fumaric acid were added, and the resulting mixture was stirred under a nitrogen atmosphere at 160°C for 6 hours. Then, 1.25 g of 5-aminovaleric acid was added thereto, and the resulting mixture was stirred under a nitrogen atmosphere at 160°C for 3 hours to yield a marine biodegradable polymer compound A-4.
It was confirmed by $^1$H-NMR measurement that the marine biodegradable polymer compound A-4 had a numerical average molecular weight of 1,900, 7 aliphatic unsaturated bonds on average, and 2 acidic groups on average.

[Example 1-5] Synthesis of marine biodegradable polymer compound A-5

To a 500 mL recovery flask, 46.9 g of 1,4-butanediol, 39.5 g of adipic acid, and 31.3 g of maleic acid were added, and the resulting mixture was stirred under a nitrogen atmosphere at 160°C for 6 hours. Then, 8.45 g of di-tert-butyl malonate, 4.00 g of potassium carbonate, and 100 g of acetonitrile were added thereto, and the resulting mixture was stirred at 70°C for 3 hours. Thereafter, 174 mL of 3 N hydrochloric acid was added thereto, and the resulting mixture was stirred for 1 hour. Subsequently, an aqueous sodium hydroxide solution was added to adjust the pH to 7, and the resulting mixture was extracted using ethyl acetate and dried under reduced pressure to yield a marine biodegradable polymer compound A-5.
It was confirmed by $^1$H-NMR measurement that the marine biodegradable polymer compound A-5 had a numerical average molecular weight of 3,600, 8 aliphatic unsaturated bonds on average, and 3 acidic groups on average.

[Comparative Example 1-1]

Sodium polyacrylate (polymerization degree: 2,700 to 7,500) (FUJIFILM Wako Pure Chemical Corporation) was used as a comparative polymer compound AX-1.
The following Table 1 collectively shows the marine biodegradable polymer compounds A-1 to A-5 and the polymer compound AX-1.

[Table 1]

|  | Polymer compound | Molecular weight | Unsaturated bond | Acidic group |
|---|---|---|---|---|
| Example 1-1 | A-1 | 2,100 | 8 | 2 |
| Example 1-2 | A-2 | 2,000 | 3 | 4 |
| Example 1-3 | A-3 | 1,800 | 2 | 2 |
| Example 1-4 | A-4 | 1,900 | 7 | 2 |
| Example 1-5 | A-5 | 3,600 | 8 | 3 |

(continued)

|  | Polymer compound | Molecular weight | Unsaturated bond | Acidic group |
|---|---|---|---|---|
| Comparative Example 1-1 | AX-1 | 50,000 | 0 | 5,000 |

[2] Synthesis of marine biodegradable polymer compound B

[Example 2-1] Synthesis of marine biodegradable polymer compound B-1

To a 300 mL recovery flask, 60.0 g of the marine biodegradable polymer compound A-1 and 21.1 g of a 10 wt% aqueous sodium hydrogen carbonate solution were added, and the resulting mixture was stirred. Then, 20.1 g of a 30 wt% aqueous calcium chloride solution was added thereto, and the resulting mixture was stirred. The resulting sediment was washed with water and then dried under reduced pressure to yield a marine biodegradable polymer compound B-1. The marine biodegradable polymer compound B-1 had a melting point of 51°C.

[Example 2-2] Synthesis of marine biodegradable polymer compound B-2

To a 300 mL recovery flask, 59.8 g of the marine biodegradable polymer compound A-2 and 40.8 g of a 10 wt% aqueous potassium hydrogen carbonate solution were added, and the resulting mixture was stirred. Then, 39.9 g of a 30 wt% aqueous magnesium chloride solution was added thereto, and the resulting mixture was stirred. The resulting sediment was washed with water and then dried under reduced pressure to yield a marine biodegradable polymer compound B-2. The marine biodegradable polymer compound B-2 had a melting point of 107°C.

[Example 2-3] Synthesis of marine biodegradable polymer compound B-3

To a 300 mL recovery flask, 30.4 g of the marine biodegradable polymer compound A-3 and 78.2 g of a 10 wt% aqueous potassium hydrogen carbonate solution were added, and the resulting mixture was stirred. Then, 25.1 g of a 30 wt% aqueous calcium chloride solution was added thereto, and the resulting mixture was stirred. The resulting sediment was washed with water and then dried under reduced pressure to yield a marine biodegradable polymer compound B-3. The marine biodegradable polymer compound B-3 had a melting point of 95°C.

[Example 2-4] Synthesis of marine biodegradable polymer compound B-4

To a 300 mL recovery flask, 61.1 g of the marine biodegradable polymer compound A-4 and 50.0 g of a 2.5 wt% aqueous sodium hydroxide solution were added, and the resulting mixture was stirred. Then, 15.2 g of a 30 wt% aqueous aluminum sulfate solution was added thereto, and the resulting mixture was stirred. The resulting sediment was washed with water and then dried under reduced pressure to yield a marine biodegradable polymer compound B-4. The marine biodegradable polymer compound B-4 had a melting point of 58°C.

[Example 2-5] Synthesis of marine biodegradable polymer compound B-5

To a 300 mL recovery flask, 60 g of the marine biodegradable polymer compound A-5 and 35.1 g of a 2 wt% aqueous sodium hydroxide solution were added, and the resulting mixture was stirred. Then, 12.0 g of a 30 wt% aqueous calcium chloride solution and 2.6 g of a 30 wt% aqueous magnesium chloride solution were added thereto, and the resulting mixture was stirred. The resulting sediment was washed with water and then dried under reduced pressure to yield a marine biodegradable polymer compound B-5. The marine biodegradable polymer compound B-5 had a melting point of 61°C.

[Comparative Example 2-1] Synthesis of ionically crosslinked polymer compound BX-1

To a 300 mL recovery flask, 30.0 of sodium polyacrylate (polymerization degree: 2,500 to 7,500) (FUJIFILM Wako Pure Chemical Corporation) and 100 g of ion-exchanged water were added, and the resulting mixture was stirred. Then, 35.1 g of a 30 wt% aqueous calcium chloride solution was added thereto, and the resulting mixture was stirred. The resulting sediment was washed with water and then dried under reduced pressure to yield an ionically crosslinked polymer compound BX-1. The polymer compound BX-1 did not thermally melt.

The following Table 2 collectively shows the marine biodegradable polymer compounds B-1 to B-5 and the ionically crosslinked polymer compound BX-1.

[Table 2]

|  | Polymer compound | Metal ion | Metal ion equivalent (eq/$10^5$ g) | Melting point (°C) |
|---|---|---|---|---|
| Example 2-1 | B-1 | Ca | 48 | 51 |
| Example 2-2 | B-2 | Mg | 92 | 107 |
| Example 2-3 | B-3 | Ca | 53 | 95 |
| Example 2-4 | B-4 | A1 | 51 | 62 |
| Example 2-5 | B-5 | Ca/Mg | 41 | 61 |
| Comparative Example 2-1 | BX-1 | Ca | 500 | - |

[3] Biodegradability test of compounds and powders

[Examples 3-1 to 3-10 and Comparative Examples 3-1 and 3-2]

The marine biodegradable polymer compounds A-1 to A-5, the marine biodegradable polymer compounds B-1 to B-5, the compound AX-1, and the polymer compound BX-1 were subjected to a seawater biodegradation test by the following method. Microcrystalline cellulose (Avicel PH-101 manufactured by Sigma-Aldrich Co. LLC.) was used as a control material, and the biodegradability was evaluated in terms of degree of biodegradation relative to cellulose. The results are shown in Table 3.

<Test method and conditions>

| Method for measuring degree of biodegradation: | measurement of oxygen consumption by a closed respirometer (see ASTM D6691) |
|---|---|
| Test apparatus: | OxiTop IDS (manufactured by WTW) |
| Culture | temperature: 30 $\pm$ 1°C, dark place |
| Degree of | biodegradation (%) = $(BOD_O\text{-}BOD_B)/ThOD \times 100$ |
| $BOD_O$: | biochemical oxygen demand in test or inoculum activity verification (measured value: mg) |
| $BOD_B$: | average biochemical oxygen demand in blank test (measured value: mg) |
| ThOD: | theoretical oxygen demand required when test material or control material has been completely oxidized (calculated value: mg) |

egree of biodegradation relative to cellulose (%) = (maximum degree of biodegradation of test particles/maximum degree of biodegradation of cellulose) $\times$ 100

Seawater (collected from Tokyo Bay [Port of Chiba in Chiba Prefecture])

Foreign matters were removed from the collected seawater with a 10 $\mu$m filter, and then the seawater was aerated at room temperature of 25°C. In addition, 0.05 g/L of ammonium chloride and 0.1 g/L of potassium dihydrogen phosphate were added as inorganic nutrients.

[Table 3]

|  | Polymer compound | Degree of biodegradation (%) | | | | Degree of biodegradation (maximum value) | Degree of degradation relative to cellulose |
|---|---|---|---|---|---|---|---|
|  |  | 15 days | 30 days | 45 days | 60 days |  |  |
| Example 3-1 | A-1 | 11 | 36 | 53 | 68 | 68 | 107 |
| Example 3-2 | A-2 | 10 | 30 | 47 | 60 | 60 | 95 |

(continued)

| | Polymer compound | Degree of biodegradation (%) | | | | Degree of biodegradation (maximum value) | Degree of degradation relative to cellulose |
|---|---|---|---|---|---|---|---|
| | | 15 days | 30 days | 45 days | 60 days | | |
| Example 3-3 | A-3 | 11 | 30 | 44 | 56 | 56 | 89 |
| Example 3-4 | A-4 | 13 | 38 | 57 | 71 | 71 | 112 |
| Example 3-5 | A-5 | 9 | 27 | 40 | 53 | 53 | 84 |
| Example 3-6 | B-1 | 8 | 33 | 48 | 60 | 60 | 95 |
| Example 3-7 | B-2 | 8 | 29 | 44 | 53 | 53 | 84 |
| Example 3-8 | B-3 | 7 | 25 | 40 | 49 | 49 | 78 |
| Example 3-9 | B-4 | 11 | 35 | 52 | 67 | 67 | 106 |
| Example 3-10 | B-5 | 10 | 25 | 37 | 46 | 46 | 73 |
| Comparative Example 3-1 | AX-1 | 0 | 0 | 0 | 0 | 0 | 0 |
| Comparative Example 3-2 | BX-1 | 0 | 0 | 0 | 1 | 1 | 1 |
| Control material | Cellulose | 62 | 63 | 63 | 63 | 63 | 100 |

From the results shown in Table 3, the particles of the Examples had almost the same level of biodegradability as that of cellulose until the culture period of 60 days.

[4] Production of marine biodegradable resin compositions and confirmation test 1 in seawater

(1) Surface change

[Examples 4-1 to 4-5 and Comparative Examples 4-1 and 4-2]

Into PBSA (FD-92 manufactured by Mitsubishi Chemical Corporation) as a biodegradable resin, each of the marine biodegradable polymer compounds B-1 to B-5 and the polymer compound BX-1 pulverized using a pulverizer (Wonder Blender WB-1 manufactured by Osaka Chemical Co., Ltd.) and classified using a stainless steel sieve (mesh size: 26 $\mu$m) was kneaded at 140°C so that the resulting mixture might have a concentration of the compound of 20 wt%, and the mixture was press-molded at 150°C to produce a film having a thickness of 200 $\mu$m (Examples 4-1 to 4-5 and Comparative Example 4-1). PBSA alone (containing no marine biodegradable polymer compound) was press-molded at 150°C to produce a film having a thickness of 200 $\mu$m (Comparative Example 4-2).

Each of the obtained films was processed into a 10 mm square piece, and the film pieces were individually placed in 200 mL of ion-exchanged water and 200 mL of seawater (collected from Tokyo Bay [Port of Chiba in Chiba Prefecture]). The film pieces were left standing at 25°C for 7 days and 30 days, then taken out, and the surface and appearance of the film pieces were observed with a scanning electron microscope. The results are shown in Table 4.

[Table 4]

| | Polymer compound | Ion-exchanged water | | Seawater | |
|---|---|---|---|---|---|
| | | 7 days | 30 days | 7 days | 30 days |
| Example 4-1 | B-1 | No change | No change | Film became uneven | Film became uneven |
| Example 4-2 | B-2 | No change | No change | Film became uneven | Film became uneven |
| Example 4-3 | B-3 | No change | No change | Film became uneven | Film became uneven |
| Example 4-4 | B-4 | No change | No change | Film became uneven | Film became uneven |

(continued)

| | Polymer compound | Ion-exchanged water | | Seawater | |
|---|---|---|---|---|---|
| | | 7 days | 30 days | 7 days | 30 days |
| Example 4-5 | B-5 | No change | No change | Film became uneven | Film became uneven |
| Comparative Example 4-1 | BX-1 | No change | No change | Film became slightly uneven | Film became uneven |
| Comparative Example 4-2 | PBSA | No change | No change | No change | Film became slightly uneven |

From the results shown in Table 4, it is considered that concurrently with disintegration by seawater, biodegradability is promoted by the presence of microorganisms in seawater.

(2) Weight loss of composite resins

[Examples 5-1 to 5-5 and Comparative Examples 5-1 and 5-2]

In the same manner as in the item (1), films obtained by adding each of the marine biodegradable polymer compounds B-1 to B-5 and the polymer compound BX-1 to PBSA, and a film of PBSA alone were produced. Each of the obtained films was processed into a 20 mm square piece, and the film pieces were sandwiched between stainless steel nets and immersed in seawater (collected from Tokyo Bay [Port of Chiba in Chiba Prefecture]) in a 15 L water tank. The progress of weight loss after immersion was observed after 30 days, 60 days, and 90 days.
The results are shown in Table 5.

[Table 5]

| | Polymer compound | Period of immersion and percent weight loss (%) | | |
|---|---|---|---|---|
| | | 30 days | 60 days | 90 days |
| Example 5-1 | B-1 | 4 | 15 | 29 |
| Example 5-2 | B-2 | 1 | 10 | 17 |
| Example 5-3 | B-3 | 2 | 10 | 22 |
| Example 5-4 | B-4 | 4 | 14 | 28 |
| Example 5-5 | B-5 | 3 | 12 | 24 |
| Comparative Example 5-1 | BX-1 | 1 | 8 | 16 |
| Comparative Example 5-2 | PBSA | 0.1 | 1 | 8 |

(3) Measurement of tensile strength

[Examples 6-1 to 6-5 and Comparative Example 6-1]

In the same manner as in the item (1), films obtained by adding each of the marine biodegradable polymer compounds B-1 to B-5 and the polymer compound BX-1 to PBSA so that the resulting mixtures might have a concentration of 10 wt%, 20 wt%, or 30 wt%, and a film of PBSA alone were produced. According to JIS K 7139-A22, dumbbells were produced from the films, and the tensile stress (yield point) was measured using a universal tester (MCT-2150 manufactured by A&D CO., LTD.). The tensile stress was measured five times for each sample, and the average value thereof was taken as the tensile stress. The results are shown in Table 6.

[Table 6]

| | Polymer compound | Tensile strength (MPa) relative to amount added (%) main resin: PBSA | | | |
|---|---|---|---|---|---|
| | | 0% | 10% | 20% | 30% |
| Example 6-1 | B-1 | | 12.7 | 11.9 | 10.8 |

(continued)

| | Polymer compound | Tensile strength (MPa) relative to amount added (%) main resin: PBSA | | | |
|---|---|---|---|---|---|
| | | 0% | 10% | 20% | 30% |
| Example 6-2 | B-2 | 12.8 | 12.8 | 11.7 | 10.4 |
| Example 6-3 | B-3 | | 13.1 | 12.2 | 11.5 |
| Example 6-4 | B-4 | | 13.0 | 11.6 | 10.8 |
| Example 6-5 | B-5 | | 12.9 | 11.8 | 10.9 |
| Comparative Example 6-1 | BX-1 | | 12.8 | 11.8 | 10.8 |

[5] Production of marine biodegradable resin compositions and confirmation test 2 in seawater

(1) Surface change

[Examples 7-1 to 7-5 and Comparative Examples 7-1 and 7-2]

Into a starch-based resin (Mater-Bi EF05B manufactured by Novamont S.p.A.) as a biodegradable resin, each of the marine biodegradable polymer compounds B-1 to B-5 and the polymer compound BX-1 pulverized using a pulverizer (Wonder Blender WB-1 manufactured by Osaka Chemical Co., Ltd.) and classified using a stainless steel sieve (mesh size: 26 $\mu$m) was kneaded at 140°C so that the resulting mixture might have a concentration of the compound of 20 wt%, and the mixture was press-molded at 150°C to produce a film having a thickness of 200 $\mu$m (Examples 7-1 to 7-5 and Comparative Example 7-1). The starch-based resin alone (containing no particle group) was press-molded at 150°C to produce a film having a thickness of 200 $\mu$m (Comparative Example 7-2).

Each of the obtained films was processed into a 10 mm square piece, and the film pieces were individually placed in 200 mL of ion-exchanged water and 200 mL of seawater (collected from Tokyo Bay [Port of Chiba in Chiba Prefecture]). The film pieces were left standing at 25°C for 7 days and 30 days, then taken out, and the surface and appearance of the film pieces were observed with a scanning electron microscope. The results are shown in Table 7.

[Table 7]

| | Polymer compound | Ion-exchanged water | | Seawater | |
|---|---|---|---|---|---|
| | | 7 days | 30 days | 7 days | 30 days |
| Example 7-1 | B-1 | No change | No change | Film became uneven | Film became uneven |
| Example 7-2 | B-2 | No change | No change | Film became uneven | Film became uneven |
| Example 7-3 | B-3 | No change | No change | Film became uneven | Film became uneven |
| Example 7-4 | B-4 | No change | No change | Film became uneven | Film became uneven |
| Example 7-5 | B-5 | No change | No change | Film became uneven | Film became uneven |
| Comparative Example 7-1 | BX-1 | No change | No change | Film became slightly uneven | Film became uneven |
| Comparative Example 7-2 | Mater-Bi | No change | No change | No change | Film became slightly uneven |

From the results shown in Table 5, it is considered that concurrently with disintegration by seawater, biodegradability is promoted by the presence of microorganisms in seawater.

(2) Weight loss of composite resins

[Examples 8-1 to 8-5 and Comparative Examples 8-1 and 8-2]

In the same manner as in the item (1), films obtained by adding each of the marine biodegradable polymer compounds B-1 to B-5 and the polymer compound BX-1 to a starch-based resin, and a film of a starch-based resin alone were produced.

Each of the obtained films was processed into a 20 mm square piece, and the film pieces were sandwiched between stainless steel nets and immersed in seawater (collected from Tokyo Bay [Port of Chiba in Chiba Prefecture]) in a 15 L water tank. The progress of weight loss after immersion was observed after 30 days, 60 days, and 90 days. The results are shown in Table 8.

[Table 8]

|  | Polymer compound | Period of immersion and percent weight loss (%) | | |
|---|---|---|---|---|
|  |  | 30 days | 60 days | 90 days |
| Example 8-1 | B-1 | 22 | 39 | 53 |
| Example 8-2 | B-2 | 18 | 34 | 50 |
| Example 8-3 | B-3 | 13 | 28 | 40 |
| Example 8-4 | B-4 | 19 | 31 | 49 |
| Example 8-5 | B-5 | 16 | 30 | 47 |
| Comparative Example 8-1 | BX-1 | 15 | 28 | 33 |
| Comparative Example 8-2 | Mater-Bi | 10 | 20 | 24 |

(3) Measurement of tensile strength

[Examples 9-1 to 9-5 and Comparative Example 9-1]

In the same manner as in the item (1), films obtained by adding each of the marine biodegradable polymer compounds B-1 to B-5 and the polymer compound BX-1 to a starch-based resin so that the resulting mixtures might have a concentration of 10 wt%, 20 wt%, or 30 wt%, and a film of a starch-based resin alone were produced.

According to JIS K 7139-A22, dumbbells were produced from the films, and the tensile stress (yield point) was measured using a universal tester (MCT-2150 manufactured by A&D CO., LTD.). The tensile stress was measured five times for each sample, and the average value thereof was taken as the tensile stress. The results are shown in Table 9.

[Table 9]

|  | Polymer compound | Tensile strength (MPa) relative to amount added (%) main resin: Mater-Bi | | | |
|---|---|---|---|---|---|
|  |  | 0% | 10% | 20% | 30% |
| Example 9-1 | B-1 | 8.8 | 9.0 | 8.2 | 7.6 |
| Example 9-2 | B-2 |  | 8.5 | 7.9 | 7.2 |
| Example 9-3 | B-3 |  | 9.2 | 8.6 | 8.0 |
| Example 9-4 | B-4 |  | 8.8 | 8.1 | 7.0 |
| Example 9-5 | B-5 |  | 8.6 | 8.0 | 7.1 |
| Comparative Example 9-1 | BX-1 |  | 8.7 | 7.8 | 6.9 |

As can be understood from the above-mentioned results, in seawater, the marine biodegradable polymer compound of the present invention is reduced in molecular weight by biodegradation prior to the biodegradable resin, or subjected to salt substitution, so that the marine biodegradable polymer compound is easily dissolved or exhibits hydrophilicity. Therefore, when the marine biodegradation promoter containing the marine biodegradable polymer compound of the present invention is added to a resin composition having biodegradability in soil or compost or a resin composition having weak biodegradability in the ocean, it becomes possible to make the resin composition have an uneven shape in seawater, to assist adhesion of microorganisms, and to promote biodegradation. As a result, it becomes possible to improve the overall marine biodegradability and to reduce the environmental load. A combination of the marine biodegradation promoter containing the marine biodegradable polymer compound of the present invention with a resin having biodegradability in soil or compost can improve seawater biodegradability. In addition, appropriately changing the structure of an organic anion can exert a plurality of effects: adjustment of the melting temperature and melt viscosity, adjustment of the crystallinity, adjustment of adhesion of microorganisms and biodegradability, adjustment of physical properties such as the tensile strength, flexural strength, and elasticity of the resin, improvement of compatibility with the resin, adjustment of hydrophobicity, adjustment of hydrophobization, adhesive properties, and adjustment of plasticity, and improvement can be achieved in terms of both the biodegradability and physical properties of the marine biodegradable resin composition.

**Claims**

1. A marine biodegradable polymer compound comprising a repeat unit including at least one bond selected from an ester bond, an amide bond, a carbonate bond, a urethane bond, and a urea bond, the marine biodegradable polymer compound having an aliphatic unsaturated carbon-carbon bond in a main chain, and at least one substituent selected from $-COO^-R^+$, $-SO_3^-R^+$, $-O-SO_3^-R^+$, and $-P(=O)(OH)-O^-R^+$, wherein $R^+$ is a hydrogen ion, a monovalent metal cation, or a monovalent organic cation, in a side chain.

2. The marine biodegradable polymer compound according to claim 1, having two or more acidic groups in the side chain.

3. The marine biodegradable polymer compound according to claim 1, wherein the repeat unit includes an ester bond.

4. The marine biodegradable polymer compound according to claim 1, having a numerical average molecular weight of 300 to 100,000.

5. The marine biodegradable polymer compound according to claim 1, further having a substituent selected from $-COO^-R^+$, $-SO_3^-R^+$, $-O-SO_3^-R^+$, and $-P(=O)(OH)-O^-R^+$, wherein $R^+$ is a hydrogen ion, a monovalent metal cation, or a monovalent organic cation, at a terminal of the main chain.

6. The marine biodegradable polymer compound according to claim 1, having, on average, 0.1 to 50 aliphatic unsaturated carbon-carbon bonds in one molecule.

7. The marine biodegradable polymer compound according to claim 1, wherein the substituent is bonded to the main chain via a linking group having 1 to 50 atoms.

8. The marine biodegradable polymer compound according to claim 1, wherein the substituent is $-COO^-R^+$.

9. The marine biodegradable polymer compound according to claim 1, having a maleic acid residue in the main chain.

10. The marine biodegradable polymer compound according to claim 1, wherein $R^+$ is a monovalent metal cation or a monovalent organic cation.

11. A marine biodegradable polymer compound comprising polymer-type polyvalent anions derived from the marine biodegradable polymer compound according to claim 1, the polymer-type polyvalent anions being bonded to each other via a divalent or higher-valent metal cation.

12. The marine biodegradable polymer compound according to claim 11, having a content of the metal cation of 1 to 100 $eq/10^5$ g.

13. The marine biodegradable polymer compound according to claim 11, wherein the divalent or higher-valent metal cation is a calcium ion, a magnesium ion, or aluminum.

14. A marine biodegradation promoter comprising the marine biodegradable polymer compound according to any one of claims 1 to 13.

15. A marine biodegradable resin composition comprising the marine biodegradation promoter according to claim 14 and a resin.

16. The marine biodegradable resin composition according to claim 15, wherein the resin is a biodegradable resin.

17. The marine biodegradable resin composition according to claim 16, having a content of the marine biodegradation promoter of 1 to 50 wt%, and a content of the biodegradable resin of 50 to 99 wt%.

18. A molded body obtained from the marine biodegradable resin composition according to claim 15.

19. A method for producing a marine biodegradable polymer compound, the method comprising a step of reacting a polymer compound containing a repeat unit including at least one bond selected from an ester bond, an amide bond, a carbonate bond, a urethane bond, and a urea bond, and having an aliphatic unsaturated carbon-carbon bond in a main chain, with a compound having a reactive group that is reactive with an aliphatic unsaturated carbon-carbon bond, and having a substituent selected from -COOH, $-SO_3H$, $-O-SO_3H$, and $-P(=O)(OH)-OH$.

20. A method for producing a marine biodegradable polymer compound, the method comprising, in a marine biodegradable polymer compound containing a repeat unit including at least one bond selected from an ester bond, an amide bond, a carbonate bond, a urethane bond, and a urea bond, and having an aliphatic unsaturated carbon-carbon bond in a main chain, and at least one substituent selected from -COOH, $-SO_3H$, $-O-SO_3H$, and $-P(=O)(OH)-OH$ in a side chain, a step of neutralizing the substituent using a monovalent base.

21. The method according to claim 20, wherein the base is lithium hydroxide, sodium hydroxide, potassium hydroxide, lithium carbonate, sodium carbonate, potassium carbonate, lithium hydrogen carbonate, sodium hydrogen carbonate, or potassium hydrogen carbonate.

22. A method for producing a marine biodegradable polymer compound, the method comprising a step of crosslinking, using a polyvalent metal salt, a marine biodegradable polymer compound containing a repeat unit including at least one bond selected from an ester bond, an amide bond, a carbonate bond, a urethane bond, and a urea bond, and having an aliphatic unsaturated carbon-carbon bond in a main chain, and at least one substituent selected from $-COO^-R^+$, $-SO_3^-R^+$, $-O-SO_3^-R^+$, and $-P(=O)(OH)-O^-R^+$, wherein $R^+$ is a hydrogen ion, a monovalent metal cation, or a monovalent organic cation, in a side chain.

23. The method according to claim 22, wherein the polyvalent metal salt is a calcium salt, a magnesium salt, or an aluminum salt.

## INTERNATIONAL SEARCH REPORT

| International application No. |
| --- |
| **PCT/JP2024/016244** |

### A. CLASSIFICATION OF SUBJECT MATTER

*C08G 85/00*(2006.01)i; *C08G 63/00*(2006.01)i; *C08G 63/91*(2006.01)i; *C08J 3/24*(2006.01)i; *C08L 67/00*(2006.01)i; *C08L 101/00*(2006.01)i; *C08L 101/02*(2006.01)i; *C08L 101/16*(2006.01)i

FI: C08G85/00; C08G63/00; C08G63/91; C08L101/00; C08L101/02; C08L67/00; C08L101/16; C08J3/24 Z CFD

According to International Patent Classification (IPC) or to both national classification and IPC

### B. FIELDS SEARCHED

Minimum documentation searched (classification system followed by classification symbols)

C08G85/00; C08G63/00; C08G63/91; C08J3/24; C08L67/00; C08L101/00; C08L101/02; C08L101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 10-182838 A (WITT CORP.) 07 July 1998 (1998-07-07) | 1-4, 6, 9-10 |
| | claims, example 6 | |
| A | | 5, 7-8, 11-23 |
| A | JP 2007-56046 A (OYA, Yuichi) 08 March 2007 (2007-03-08) | 1-23 |
| | entire text | |
| A | JP 64-20218 A (SHOWA HIGHPOLYMER CO., LTD.) 24 January 1989 (1989-01-24) | 1-23 |
| | entire text | |
| P, A | WO 2023/100260 A1 (NISSHINBO HOLDINGS INC.) 08 June 2023 (2023-06-08) | 1-23 |
| | entire text | |

☐ Further documents are listed in the continuation of Box C.  ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 June 2024** | **02 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/016244**

| Patent document cited in search report | | | Publication date (day/month/year) | Patent family member(s) | | | Publication date (day/month/year) |
|---|---|---|---|---|---|---|---|
| JP | 10-182838 | A | 07 July 1998 | US | 5698626 | A | |
| | | | | claims, example 6 | | | |
| | | | | EP | 850969 | A1 | |
| JP | 2007-56046 | A | 08 March 2007 | (Family: none) | | | |
| JP | 64-20218 | A | 24 January 1989 | (Family: none) | | | |
| WO | 2023/100260 | A1 | 08 June 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S52012233 B
- JP H05071056 B
- JP 2013010948 A
- JP 2016094589 A
- JP 2004027148 A
- JP 2021191810 A

### Non-patent literature cited in the description

- **HIDESHIGE TAKADA**. A Look at the Status of Microplastic Pollution Trends and Possible Solution Frameworks. *Journal of the Japan Society of Material Cycles and Waste Management*, 2018, vol. 29 (4), 261-269
- **AKIRA EBISUI**. Degradation of Biodegradable Plastics in Seawater. *Fisheries Engineering*, 2003, vol. 40 (2), 143-149
- *Sen'i To Kogyo*, 1984, vol. 40 (4.5), 259-261